# EUROPÄISCHE PATENTSCHRIFT

(11) **EP 1 944 412 B1**
(45) Veröffentlichungstag und Bekanntmachung des Hinweises auf die Patenterteilung: **29.12.2010**
(21) Anmeldenummer: 07023019.8
(22) Anmeldetag: 28.11.2007
(51) Int. Cl.: D21G 1/02

(54) **Walze und Verfahren zum Betrieb derselben**
Roll and method for operating the same
Rouleau et procédé de fonctionnement de celui-ci

(30) Priorität: 15.01.2007 DE 102007002869; 08.09.2007 DE 102007042906
(43) Veröffentlichungstag der Anmeldung: 16.07.2008
(73) Patentinhaber: Andritz Küsters GmbH, 47805 Krefeld (DE)
(72) Erfinder: Kubik, Klaus, 47918 Tönisvorst (DE); Hünnekens, Andre, 47647 Kerken (DE)
(74) Vertreter: Kluin, Jörg-Eden

(56) Entgegenhaltungen:
- DE-A1- 3 608 374

## Beschreibung

Die Erfindung betrifft eine Walze mit einer den arbeitenden Walzenumfang bildenden umlaufenden Hohlwalze, mit einem diese der Länge nach durchgreifenden, ringsum Abstand zum Innenumfang der Hohlwalze belassenden Querhaupt, auf welches an den aus der Hohlwalze hervorragenden Enden äußere Kräfte aufbringbar sind, mit in dem Zwischenraum zwischen der Hohlwalze und dem Querhaupt gebildeten Stützmitteln, über die sich die Hohlwalze mittels einer Druckflüssigkeit auf dem Querhaupt abstützt, mit einem an jedem Ende der Hohlwalze axial außerhalb der Endquerdichtung angeordneten Lager, auf welchem die Hohlwalze gegenüber dem Querhaupt drehbar abgestützt ist, mit einer einen Bereich großen Innendurchmessers und einen zum nahe gelegenen Ende der Walze hin axial benachbarten Bereich geringeren Innendurchmessers aufweisenden Lagerglocke, wobei die Hohlwalze mit einem im Außendurchmesser verringerten axialen Ansatz in den Bereich größeren Innendurchmessers der Lagerglocke eingreift, und wobei zwischen dem Ende des Ansatzes und der Lagerglocke eine Dichtung gegen den Austritt zwischen dem Ansatz und dem Querhaupt befindlicher Flüssigkeit vorgesehen ist. Die Erfindung betrifft ferner ein Verfahren zum Betrieb einer derartigen Walze.

Eine oben beschriebene Walze ist aus der DE 36 08 374 A1 bekannt. Sie entspricht bis auf die Dichtungsausbildung einer üblichen Ausführungsform einer sogenannten "schwimmenden Walze". Ein kennzeichnendes Merkmal hierbei ist, dass die durch die Endquerdichtung, die nicht hermetisch zu dichten braucht, hindurchtretende Leckflüssigkeit zur Schmierung der außerhalb der Endquerdichtungen angeordneten Lager dient, auf denen die Hohlwalze auf dem Querhaupt drehbar abgestützt ist. Die Druckflüssigkeit ist üblicherweise ein Hydrauliköl, welches, wenn die "schwimmende Walze" bei normalen Temperaturen betrieben wird, sowohl als Hydraulikflüssigkeit als auch als Schmierflüssigkeit für die Lager dienen kann.

Die "schwimmende Walze" wird in vielen Fällen auch beheizt eingesetzt, d.h. es wird das Drucköl auf erhöhte Temperatur gebracht. Sie eignet sich für eine Beheizung besonders gut, weil große Querschnitte für den Durchsatz von Beheizungsflüssigkeit möglich sind und dennoch bei geeigneter Steuerung des Flüssigkeitsstroms eine gute Temperaturgleichmäßigkeit über die Warenbahnbreite erzielbar ist, wenn nämlich in der auf der Seite des Walzspalts gelegenen Längskammer (Druckkammer) die Druckflüssigkeit in der einen Richtung längs der Walze strömen gelassen wird und in der gegenüberliegenden Längskammer (Leckkammer) in der entgegengesetzten Richtung.

Die vorliegende Erfindung ist jedoch keinesfalls auf "schwimmende Walzen" beschränkt, sondern umfasst allgemein durchbiegesteuerbare Walzen, beispielsweise auch solche, bei welchen die Hohlwalze über eine Mehrzahl über die längs der Hohlwalze verteilter, hydraulischer Stützelemente auf dem Querhaupt abgestützt ist.

Bei all diesen durchbiegesteuerbaren Walzen sind den erzielbaren Temperaturen Grenzen gesetzt, weil sich die üblichen Druckflüssigkeiten, die noch gute Schmiereigenschaften für die Lager aufweisen, bei höheren Temperaturen zersetzen und andererseits Flüssigkeiten, die höhere Temperaturen vertragen, keine ausreichenden Schmiereigenschaften aufweisen. Wenn also bei der bekannten Konstruktion eine Beheizung vorgenommen werden soll und ein und dieselbe Flüssigkeit sowohl zur Ausübung des Drucks und zur Lieferung der Wärme als auch zur Schmierung der Lager dient, gibt es eine Grenztemperatur, die mit den heute bekannten Flüssigkeiten nicht überschritten werden kann. Um durchbiegesteuerbare Walzen mit möglichst hohen Außentemperaturen von beispielsweise etwa 240 bis 250°C am Umfang fahren zu können, wozu Temperaturen der Wärmeträgerflüssigkeit in den Längskammem im Falle einer schwimmenden Walze bzw. in den hydraulischen Stützelementen bei einer durchbiegesteuerbaren Walze von 260 bis 280°C und teilweise darüber notwendig sind, wird bei der DE 36 08 374 A1 die Flüssigkeit, die den Druck erzeugt und die Wärme überträgt, von der Schmierflüssigkeit für die Lager getrennt und auch der räumliche Abstand so groß gewählt, dass keine wesentliche Wärmeübertragung von der heißen Wärmeträgerflüssigkeit auf die Schmierflüssigkeit stattfindet. Konstruktiv gelingt dies bei dieser Walze dadurch, dass das Lager auf der Außenseite des Ansatzes der Hohlwalze angeordnet und somit von der Wärmeträgerflüssigkeit, die sich im Innern der Hohlwalze und des Ansatzes befindet, radial getrennt ist. Dabei verbleibt die eigentliche Menge der Wärmeträgerflüssigkeit innerhalb der Hohlwalze zwischen den Endquerdichtungen und es treten allenfalls geringe Mengen in den Zwischenraum zwischen dem Querhaupt und dem Innenumfang des Ansatzes ein. Es steht jedoch stets Flüssigkeit vor der am Ende des Ansatzes vorgesehenen Dichtung und es findet in diesem Bereich keine nennenswerte Strömung längs der Walzenachse und damit Wärmeübertragung statt.

Insbesondere dann, wenn es sich bei der Dichtung, die den zwischen dem Ansatz und dem Querhaupt gebildeten Raum abdichtet, um eine Gleitringdichtung handelt, hat sich jedoch gezeigt, dass trotz des Abschirmens der heißen Wärmeträgerflüssigkeit von der kühleren Schmierflüssigkeit die Gleitringdichtung selbst bei Temperaturen unterhalb der maximalen Betriebstemperatur der Gleitringdichtung zum Versagen neigt.

Der Erfindung liegt daher die Aufgabe zugrunde, eine gattungsgemäße Walze derart weiterzubilden und ein Verfahren zum Betrieb dieser Walze zu schaffen, bei welcher bzw. mittels welchem die Standfestigkeit der Gleitringdichtung erhöht wird.

Diese Aufgabe wird durch das in Anspruch 1 wiedergegebene Verfahren und die in Anspruch 4 wiedergegebene Walze gelöst.

Bei den zum Stand der Technik gehörenden Walzen bzw. bei deren Betriebsverfahren wurde stets zur Verschleißreduzierung der Gleitringdichtung die Temperatur des Öls, mit welchem die Gleitringdichtung in Berührung kommt, möglichst niedrig gehalten. Ein Wärmetausch zum Lager wurde hierzu unbedingt vermieden.

Die Erfindung setzt sich über dieses Vorurteil hinweg und lässt bewusst zu, dass die Gleitringdichtung mit heißerem Öl in Berührung kommt. Sie hat erkannt, dass für die Standfestigkeit der Gleitringdichtung maßgeblich nicht wesentlich die Temperatur des Öls, mit dem die Gleitringdichtung in Berührung kommt, ist, sondern dass übermäßiger Verschleiß durch unterhalb der Gleitringdichtung angereicherte Gase, die zum Abriss des Schmierfilms und somit zum Trockenlauf der Gleitringdichtung führen können, hervorgerufen wird.

Demgemäß sieht das erfindungsgemäße Verfahren vor, dass der von der Dichtung zwischen dem Ansatz und dem Querhaupt abgedichtete Raum entgast wird.

In einer ersten Variante des erfindungsgemäßen Verfahrens findet die Entgasung des von der Dichtung zwischen dem Ansatz und dem Querhaupt abgedichteten Raumes permanent statt.

In einer zweiten Variante des erfindungsgemäßen Verfahrens erfolgt die Entgasung zyklisch, d.h. in vorbestimmten Zeitabständen. Da mit der Entgasung stets ein Übertritt von heißer Wärmeträgerflüssigkeit zum Lager einhergeht, hat die zweite Variante den Vorteil, dass durch eine geeignete Auswahl der Entgasungszyklen der Wärmeübertrag zum Lager auf ein unvermeidbares Minimum reduziert werden kann, gleichzeitig jedoch die Anreicherung der Gase auf kritische Werte vermieden wird.

Zur Durchführung des erfindungsgemäßen Betriebsverfahrens umfasst die erfindungsgemäße Walze einen Entgasungskanal, durch welchen Gas von der Dichtung abströmen kann.

Bei einer ersten Variante des erfindungsgemäßen Verfahrens kann der Entgasungskanal den zwischen dem Ansatz und dem Querhaupt abgedichteten Raum mit einer innerhalb des Querhauptes vorgesehenen Zuleitung für Druckund Wärmeträgerflüssigkeit verbinden.

Alternativ oder zusätzlich kann auch ein Kanal vorgesehen sein, der von der Dichtung zu einem äußeren Volumen führt.

Um die Effektivität der Entgasung zu erhöhen, können Mittel vorgesehen sein, mit denen in dem Entgasungskanal ein Druck erzeugt wird, der geringer als der Druck in dem zwischen dem Ansatz und dem Querhaupt abgedichteten Raum ist.

Die Mittel können wahlweise oder gleichzeitig eine Saugpumpe, die an dem Entgasungskanal angeschlossen ist, oder eine Querschnittsreduzierung der Zuleitung der Druck- und Wärmeträgerflüssigkeit umfassen, die in dem Bereich vorgesehen ist, in dem der Entgasungskanal in die Zuleitung einmündet, derart, dass durch die dadurch hervorgerufene erhöhte Strömungsgeschwindigkeit in der Zuleitung ein Saugeffekt in dem Entgasungskanal bewirkt wird.

Zur Querschnittsreduzierung kann eine Verringerung des Durchmessers der Zuleitung vorgesehen sein.

Vor allem im Falle einer Nachrüstung kann zur Querschnittsreduzierung vorzugsweise auch ein in die Zuleitung eingebrachter Strömungskörper vorgesehen sein.

Besonders bevorzugt ist es, wenn der Entgasungskanal Teil eines Kreislaufs ist, in dem mit dem Gas abgeführte Druck- und Wärmeflüssigkeit umläuft. Letztere kann nach der Entgasung wieder der Walze zugeführt werden.

Zur Entgasung ist vorzugsweise ein Ausdehnungsgefäß in den Kreislauf zugeschaltet, welches - besonders bevorzugt - einen Ausperltopf umfasst.

Ferner ist es möglich, das äußere Volumen in einem Gasabführsystem vorzusehen, in welchem beispielsweise auch eine Kühlung oder Reinigung der Wärmeträgerflüssigkeit erfolgt.

Darüber hinaus kann die erfindungsgemäße Walze Mittel umfassen, mittels welchen die Verbindung zwischen dem Kanal und dem äußeren Volumen zyklisch hergestellt und unterbrochen werden kann, um so zu verhindern, dass durch einen stetigen Übertritt von Wärmeträgerflüssigkeit und Einwirkung auf die Dichtung Dichtungstemperaturen entstehen, die oberhalb eines zulässigen Wertes liegen.

Bei der Dichtung kann es sich - wie aus dem Stand der Technik bekannt - um eine Gleitringdichtung handeln.

Die Erfindung soll nun anhand der in der Zeichnung dargestellten Ausführungsbeispiele weiter erläutert werden. Es zeigen:

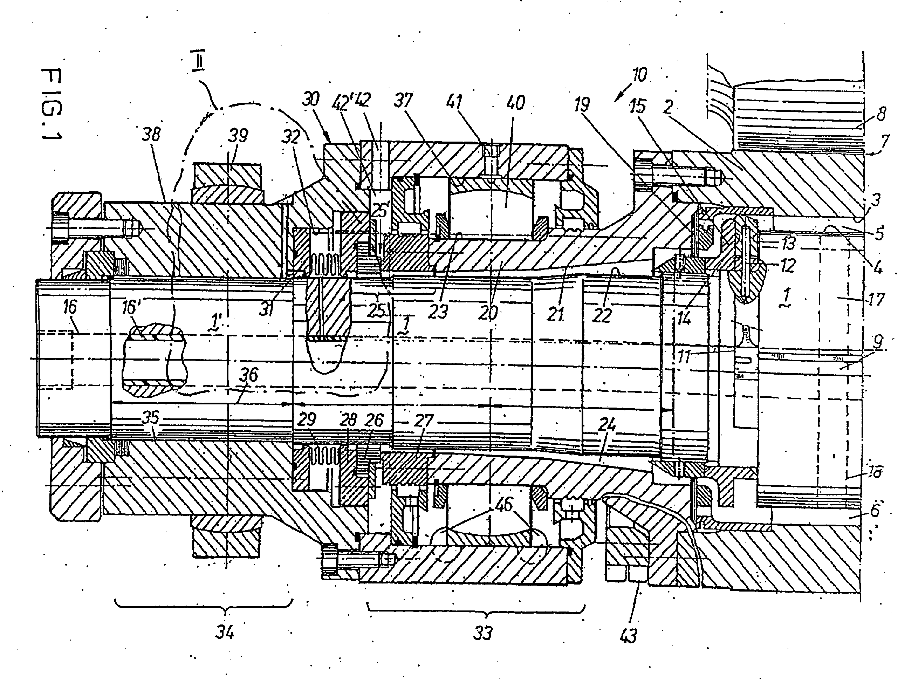

Fig. 1 einen Teillängsschnitt durch das linke Ende einer erfindungsgemäßen Walze
Fig. 2 den Ausschnitt II in Fig. 1 in einer vergrößerten Darstellung, sowie
Fig. 3 ein weiteres Ausführungsbeispiel einer erfindungsgemäßen Walze in einer Fig. 1 entsprechenden Darstellung.

Die in der Zeichnung als Ganzes mit 10 bezeichnete Walze umfasst ein feststehendes Querhaupt 1 in Gestalt eines im wesentlichen massiven und zylindrischen Trägers, um welchen eine Hohlwalze 2 umläuft, die mit ihrem Innenumfang 3 Abstand von dem Außenumfang 4 des Querhaupts 1 belässt. Der zylindrische Zwischenraum zwischen dem Innenumfang 3 der Hohlwalze 2 und dem Außenumfang 4 des Querhaupts 1 ist in eine auf der Seite des Walzspalts 7, d.h. auf der Seite einer Gegenwalze 8, gelegene Längskammer 5 (Druckkammer) und einer auf der gegenüberliegenden Seite gelegene Längskammer 6 (Leckkammer) unterteilt, und zwar durch am Querhaupt angeordnete, am Innenumfang 3 der Hohlwalze 2 dichtend anliegende Längsdichtungen 9, die zu beiden Seiten des Querhaupts 1 an dessen breitester Stelle angeordnet sind und von denen in der Zeichnung nur die vordere Längsdichtung 9 zu sehen ist. Die Längskammern 5, 6 haben also etwa die Gestalt zylindrischer Halbschalen, und es ist die Längskammer 5 (Druckkammer) an beiden Enden durch Endquerdichtungen 11 geschlossen. Die Endquerdichtungen 11 haben in dem Ausführungsbeispiel die Form von Halbringen, die sich über die obere Hälfte des Querhaupts 1 erstrecken und mit ihrem Außenumfang am Innenumfang 3 der Hohlwalze 2 anliegen. Die Endquerdichtungen 11 sind an Führungsstiften 12 geführt, die sich senkrecht zur Achse des Querhauptes 1 in der Wirkebene erstrecken, d.h. in der Ebene, in der die Resultierende der von der Druckflüssigkeit in der Längskammer 5 ausgeübten Kräfte liegt. Diese Wirkebene fällt in vielen Fällen mit der Verbindungsebene der Achse der Hohlwalze 2 und der Achse der Gegenwalze 8 zusammen.

Die Endquerdichtung 11 hat einen im wesentlichen rechteckigen Querschnitt und liegt mit einer Flanke an einem Absatz 13 des Querhauptes 1 an, mit der anderen Flanke an der Flanke 14 eines von dem Führungsstift 12 und dem Querhaupt 1 festgehaltenen Halterings 15.

Die Längsdichtungen 9 auf den beiden Seiten bilden mit den an den beiden Enden der Hohlwalze 2 angebrachten Endquerdichtungen eine geschlossene Druckkammer 5, die über eine isolierte Zuleitung 16, die in einen Einlass 17 an der Oberseite des Querhauptes 1 mündet, mit Druck- und Wärmeträgerflüssigkeit versorgt werden kann. Die Druck- und Wärmeträgerflüssigkeit strömt in der Längskammer 5 gemäß der Zeichnung nach rechts, tritt nahe dem dortigen Ende der Längskammer 5 durch einen Querkanal in die Leckkammer 6 über und strömt in dieser wieder von rechts nach links, um an einem Auslass 18 und einem nicht dargestellten Auslasskanal wieder abgesaugt zu werden. Die Leckkammer 6 ist manchmal auch mit Druckflüssigkeit gefüllt. Sie hat dann ebenfalls Endquerdichtungen. Der Druck in der Leckkammer 6 ist dann allerdings geringer als der in der Druckkammer 5. Für die Ausübung des Liniendrucks im Walzspalt 7 ist die Differenz der Drücke in den beiden Kammern 5, 6 maßgebend.

In dem gezeigten Ausführungsbeispiel jedoch ist die Leckkammer nach links nicht durch eine Endquerdichtung abgeschlossen. Es kann also Druckflüssigkeit an dem Auslass 18 vorbei nach links über die Flanke 13 hinaus übertreten. Damit die Hauptmenge in der Leckkammer 6 verbleibt, ist ein Abweisring 19 vorgesehen, der anströmende Flüssigkeit wieder in die Leckkammer 6 zurücklenkt, wo sie über den Auslass 18 abgeführt wird. An der Hohlwalze 2 ist stirnseitig ein hülsen- oder buchsenartiger Ansatz 20 befestigt, der die Hohlwalze 2 fortsetzt und dessen Außenumfang 23 einen geringeren Durchmesser als der Außendurchmesser der Hohlwalze 2 besitzt. Der Innenumfang 21 des Ansatzes 20 belässt einen geringen Abstand zum Außenumfang 22 des aus der Hohlwalze 2 hervorragenden Endes des Querhauptes 1. Es ist also ein Abstandsraum 24 gebildet, in welchen geringfügige Anteile der Druck- und Wärmeträgerflüssigkeit aus der Leckkammer 6 übertreten können, wenn sie den Abweisring 19 überwunden haben. Eine wesentliche Strömung kann in dem Abstandsraum 24 jedoch nicht stattfinden, weil dieser am in der Zeichnung linken Ende durch eine als Ganzes mit 25 bezeichnete Gleitringdichtung verschlossen ist. Die Gleitringdichtung 25 umfasst den eigentlichen Gleitring 26, der an seinem Innenumfang Abstand vom Querhaupt 1 belässt, den Gegenring 27, der mit der Stirnseite des Ansatzes 20 verbunden ist, einen Führungsring 28, der den Gleitring 26 in der richtigen Position hält und der über einen Metallbalg 29 abgedichtet ist. Der Metallbalg 29 ist an seinem einen axialen Ende dicht mit dem Führungsring 28 verbunden, an dem anderen axialen Ende mit einem Haltering 31 der in einer zylindrischen Ausnehmung 32 einer als Ganzes mit 30 bezeichneten Lagerglocke befestigt ist.

Die Lagerglocke 30 ist in dem Ausführungsbeispiel zweiteilig ausgeführt und besitzt einen Bereich 33 größeren Innendurchmessers, der der Hohlwalze 2 zugewandt ist und einen geringfügig kleineren Außendurchmesser als diese aufweist, sowie einen daran anschließenden Bereich 34 kleineren Innen- und Außendurchmessers, der mit seinem zylindrischen Innenumfang 35 auf dem zylindrischen Endteil 1' des Querhauptes 1 spielfrei aufgeschoben ist. Diese Anordnung ergibt eine Führungslänge 36, die die Fluchtung zwischen der Achse des Querhauptes und der Achse der Lagerglocke 30 aufrechterhält, auch wenn die Lagerglocke 30 außerhalb des Bereichs 34 radial belastet wird. Eine solche Belastung kommt durch das Lager 40 zustande, welches in dem Bereich 33 der Lagerglocke 30 zwischen dessen Innenumfang 37 und dem Außenumfang 23 des Ansatzes 20 angeordnet ist und auf welchem die Hohlwalze 2 an der Lagerglocke 30 drehbar abgestützt ist. Da sich das Querhaupt 1 innerhalb der Hohlwalze 2 bei Belastung durchbiegt und die Lagerglocke 30, da sie ja über die Führungslänge 36 fest mit dem Querhaupt 1 verbunden ist, dieser Durchbiegung folgt, die Hohlwalze 2 aber nicht, sind die Lager 40 als Pendellager ausgebildet, die Fluchtfehler zwischen den Flächen 23 und 37 ausgleichen können.

Die äußeren Kräfte werden in das aus der Hohlwalze 2 vorstehende Ende 1' des Querhauptes 1 in dem Bereich 34 der Lagerglocke 30 eingeleitet, und zwar durch das auf dem dortigen Außenumfang 38 der Lagerglocke 30 angeordnete Pendellager 39, welches aber im Gegensatz zu dem Pendellager 40 kein Drehlager ist, da die Lagerglocke 30 ebenso wie das Querhaupt 1 stillsteht. Da der Außenumfang 38 des Bereichs 34 der Lagerglocke 30 einen wesentlich geringeren Durchmesser als die Hohlwalze 2 aufweist, kann erreicht werden, dass der Außendurchmesser des Pendellagers 39 ebenfalls noch kleiner ist als der Außendurchmesser der Hohlwalze 2, was aus konstruktiven Gründen erwünscht ist.

Durch die gezeigte Konstruktion ist es dann möglich, den Kreislauf der Druckund Wärmeträgerflüssigkeit in den Längskammern 5 und 6 gänzlich von dem Schmierkreislauf für das Lager 40 zu trennen. Die Druck- und Wärmeträgerflüssigkeit kann auch in den Zwischenraum 24 eindringen, jedoch nur bis zu der Gleitringdichtung 25. Die Schmierflüssigkeit für die Lager 40 wird an einem Einlass 41 oben zugeführt und an Auslässen 46 drucklos, d.h. ohne Staubildung, unten wieder abgesaugt. Da die Flüssigkeit in dem Zwischenraum 24 in Richtung der Walzenachse steht und nicht strömt, kühlt sie sich sehr rasch ab, so dass ein nennenswerter Wärmeübergang in das Lager 40 zunächst nicht stattfindet. Hierzu trägt auch die Isolierung 16' der Zuleitung 16 bei.

Die Gleitfläche 25' der Gleitringdichtung 25 ist von einer Kammer 42' ringförmig umgeben, der durch eine Zuleitung 42 Stickstoff zuführbar ist. Dadurch wird verhindert, dass aus dem Abstandsraum 24 an der Gleitfläche 25' übertretende Wärmeträgerflüssigkeit mit Luftsauerstoff in Berührung kommt und auf der Gleitfläche 25' vercrackt.

Der Antrieb der Hohlwalze 2 kann gewünschtenfalls auf einfache Weise durch ein am Ende der Hohlwalze 2 angeordnetes Kettenrad und eine darum geschlungene Kette erfolgen, wie es bei der Stelle 43 im unteren Teil der Zeichnung dargestellt ist.

Die Führungslänge 36 muss einen gewissen Wert aufweisen, damit die Lagerglocke 30 ausreichend gegen die vom Lager 40 eingeleiteten Kippkräfte abgestützt ist. Die Führungslänge ist größenordnungsmäßig etwa gleich dem Abstand von dem der Hohlwalze 2 zugewandten Ende des zylindrischen Innenumfangs 35 der Lagerglocke 30 bis zur Mitte des Lagers 40 und ebenfalls größenordnungsmäßig etwa gleich dem Abstand von dieser Mitte bis zum Ende der Hohlwalze 2. Es ergibt sich auf diese Weise die nötige Distanz zwischen der heißen Zone im Bereich der Längskammern 5 und 6 und dem Lager 40. Auch erhält der Zwischenraum 24 zwischen dem Ansatz 20 und dem Ende des Querhauptes 1 dadurch eine gewisse Länge, so dass sich etwa noch übertretende Druck- und Wärmeträgerflüssigkeit in diesem Zwischenraum "totlaufen" kann und es im Bereich des Lagers 40 nicht mehr zu nennenswerten Strömungen und Wärmetransporten kommt.

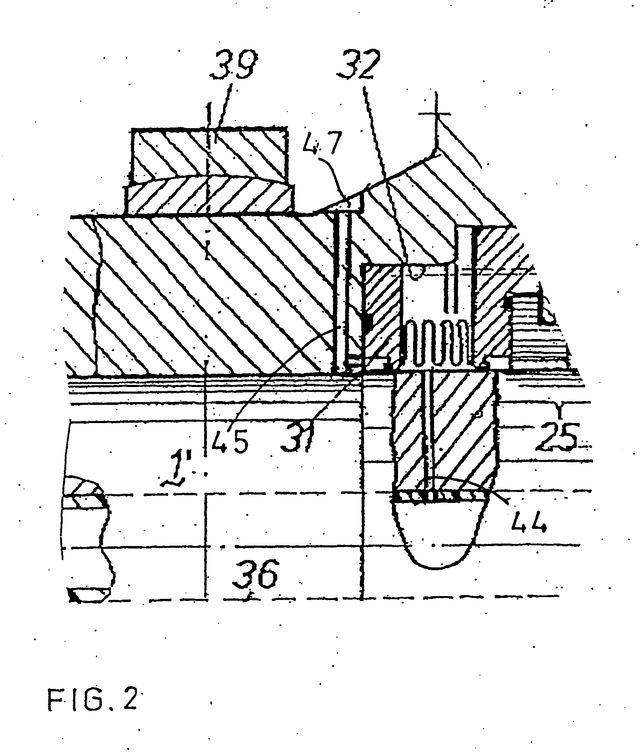

Wie insbesondere in Fig. 2 erkennbar ist, sind Entgasungkanäle 44, 45 vorgesehen, über welche im Bereich der Dichtung im Öl angereicherte Gase entweichen können.

Der eine Entgasungskanal 44 erstreckt sich von dem Bereich des Abstandsraums 24 unterhalb des Metallbalgs 29 bis in die Zuleitung 16 für die Druckund Wärmeträgerflüssigkeit. Zwar können durch den Entgasungskanal 44 auch geringe Mengen an heißer Druck- und Wärmeträgerflüssigkeit zur Dichtung 25 gelangen, überraschenderweise hat sich aber gezeigt, dass sich die hierdurch hervorgerufene Temperaturerhöhung der Dichtung nicht negativ auf deren Standzeit aufweist, sondern die Standzeit durch die Möglichkeit, dass angereicherte Gase abströmen können, wesentlich erhöht wird.

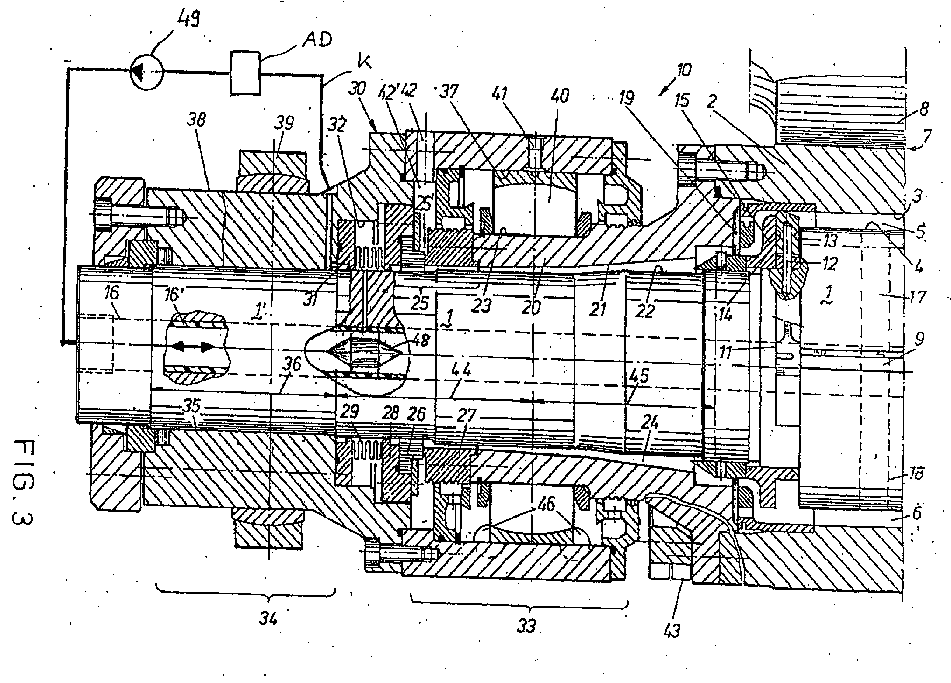

Bei der in Fig. 3 dargestellten Ausführungsform erfolgt die Ableitung des Gases dadurch, dass in dem Entlüftungskanal 44 und 45 ein Unterdruck erzeugt wird.

Dies geschieht dadurch, dass in dem Bereich, in dem der Entlüftungskanal 44 in die drucklose Zuleitung 16 für die Druck- und Wärmeträgerflüssigkeit mündet, sich in dieser ein Strömungskörper 48 befindet, welcher eine erhöhte Strömungsgeschwindigkeit an der Einlassöffnung und dadurch einen Unterdruck und damit einen Saugeffekt bewirkt.

Der zweite Entgasungskanal 45 mündet in die Ausnehmung 32 im Bereich unterhalb des Halterings 31 und führt durch die Lagerglocke nach außen. An den Auslass 47 des Entgasungskanals 45 ist eine Leitung angeschlossen, die Teil eines Kreislaufs K ist. Letzterer umfasst ein Ausdehnungsgefäß AD, welches etwa durch die Verwendung eines Ausperltopfes sicherstellt, dass die Druckund Wärmeträgerflüssigkeit nicht mit Luftsauerstoff in Berührung kommt, wodurch eine Vercrackung vermieden wird. In den Kreislauf ist eine Saugpumpe 49 eingeschaltet, mittels welcher die Absaugeffektivität erhöht ist. Selbstverständlich kann auch bei dem Entgasungskanal 45 die Erzeugung des Unterdrucks alternativ oder zusätzlich zu der Saugpumpe in der für Kanal 44 beschriebenen Art und Weise geschehen.

Zwar begünstigt auch der Entgasungskanal 45 dadurch, dass durch ihn Druckund Wärmeträgerflüssigkeit mit dem Gas abfließen kann, den Zutritt heißer Druck- und Wärmeträgerflüssigkeit zur Dichtung 25, wiederum ist jedoch die Standzeit der Dichtung überraschenderweise trotz der Temperaturerhöhung verbessert, was auf die Möglichkeit des Ableitens angereicherter Gase zurückzuführen ist.

Die Menge der durch die Entgasung aus dem Bereich der Hohlwalze 2 in den Abstandsraum 24 nachströmenden heißeren Druck- und Wärmeträgerflüssigkeit kann dadurch verringert werden, dass durch geeignete Maßnahmen erreicht wird, dass mit dem Gas möglichst wenig Druck- und Wärmeträgerflüssigkeit abgeführt wird, das Gas also schon vor oder bei der Entnahme weitestgehend von der Druck- und Wärmeträgerflüssigkeit getrennt wird.

Die Rückführung des Gases und der mit dem Gas abgeführten Druck- und Wärmeträgerflüssigkeit bzw. nur dieser oder nur des Gases kann auch durch Einleitung in den Abstandsraum 24 durch die Leitung 45 erfolgen, in dem die Rampe 49 in umgekehrter Wirkrichtung betrieben wird und sonst die Druck- und Wärmeträgerflüssigkeit in den Raum 6 über die Grobdichtung 19 gedrückt wird. Hierdurch wird ebenfalls die Menge der aus dem Bereich der Hohlwalze 2 in den Abstandsraum 24 nachströmenden Druck- und Wärmeträgerflüssigkeit verringert.

Bei dem in der Zeichnung dargestellten Ausführungsbeispiel sind die beiden unterschiedlich angeordneten Entgasungskanäle gemeinsam verwirklicht. Es versteht sich, dass es ebenso möglich ist, lediglich einen der beiden Entgasungskanäle 44 bzw. 45 zu verwirklichen.

### Bezugszeichenliste:

- 1: Querhaupt
- 1': Endteil
- 2: Hohlwalze
- 3: Innenumfang
- 4: Außenumfang
- 5: Längskammer
- 6: Längskammer
- 7: Walzspalt
- 8: Gegenwalze
- 9: Längsdichtung
- 10: Walze
- 11: Endquerdichtungen
- 12: Führungsstifte
- 13: Absatz
- 14: Flanke
- 15: Haltering
- 16: Zuleitung
- 16': Isolierung
- 17: Einlass
- 18: Auslass
- 19: Abweisring
- 20: Ansatz
- 21: Innenumfang
- 22: Außenumfang
- 23: Außenumfang
- 24: Abstandsraum
- 25: Gleitringdichtung
- 25': Gleitfläche
- 26: Gleitring
- 27: Gegenring
- 28: Führungsring
- 29: Metallbalg
- 30: Lagerglocke
- 31: Haltering
- 32: Ausnehmung
- 33: Bereich
- 34: Bereich
- 35: Innenumfang
- 36: Führungslänge
- 37: Innenumfang
- 38: Außenumfang
- 39: Pendellager
- 40: Lager
- 41: Einlass
- 42: Zuleitung
- 42': Kammer
- 43: Stelle
- 44: Entgasungskanal
- 45: Entgasungskanal
- 46: Auslass
- 47: Auslass
- 48: Strömungskörper
- 49: Saugpumpe
- AD: Ausgleichsgefäß
- K: Kreislauf

## Patentansprüche

1. Verfahren zum Betrieb einer Walze (10) mit einer den arbeitenden Walzenumfang bildenden umlaufenden Hohlwalze (2),
mit einem diese der Länge nach durchgreifenden, ringsum Abstand zum Innenumfang der Hohlwalze (2) belassenden Querhaupt (1), auf welches an den aus der Hohlwalze (2) hervorragenden Enden äußere Kräfte aufbringbar sind,
mit in dem Zwischenraum zwischen der Hohlwalze (2) und dem Querhaupt (1) gebildeten Stützmitteln, über die sich die Hohlwalze (2) mittels einer Druckflüssigkeit auf dem Querhaupt (1) abstützt,
mit einem an jedem Ende der Hohlwalze (2) axial außerhalb einer Endquerdichtung (11) angeordneten Lager (40), auf welchem die Hohlwalze (2) gegenüber dem Querhaupt (1) drehbar abgestützt ist, mit einer einen Bereich (33) großen Innendurchmessers und einen zum nahe gelegenen Ende der Walze (10) hin axial benachbarten Bereich (34) geringeren Innendurchmessers aufweisenden Lagerglocke (30),
wobei die Hohlwalze (2) mit einem im Außendurchmesser verringerten axialen Ansatz (20) in den Bereich (33) größeren Innendurchmessers der Lagerglocke (30) eingreift, und wobei zwischen dem Ende des Ansatzes (20) und der Lagerglocke (30) eine Dichtung (25) gegen den Austritt zwischen dem Ansatz (20) und dem Querhaupt (1) befindlicher Flüssigkeit vorgesehen ist,
**dadurch gekennzeichnet,**
**dass** der von der Dichtung (25) zwischen dem Ansatz (20) und dem Querhaupt (1) abgedichtete Raum entgast wird.

2. Verfahren nach Anspruch 1, **dadurch gekennzeichnet, dass** der von der Dichtung (25) zwischen dem Ansatz (20) und dem Querhaupt (1) abgedichtete Raum permanent entgast wird.

3. Verfahren nach Anspruch 1, **dadurch gekennzeichnet, dass** der von der Dichtung (25) zwischen dem Ansatz (20) und dem Querhaupt (1) abgedichtete Raum zyklisch entgast wird.

4. Walze (10),
mit einer den arbeitenden Walzenumfang bildenden umlaufenden Hohlwalze (2),
mit einem diese der Länge nach durchgreifenden, ringsum Abstand zum Innenumfang der Hohlwalze (2) belassenden Querhaupt (1), auf welches an den aus der Hohlwalze (2) hervorragenden Enden äußere Kräfte aufbringbar sind,
mit in dem Zwischenraum zwischen der Hohlwalze (2) und dem Querhaupt (1) gebildeten Stützmitteln, über die sich die Hohlwalze (2) mittels einer Druckflüssigkeit auf dem Querhaupt (1) abstützt,
mit einem an jedem Ende der Hohlwalze (2) axial außerhalb einer Endquerdichtung (11) angeordneten Lager (40), auf welchem die Hohlwalze (2) gegenüber dem Querhaupt (1) drehbar abgestützt ist, mit einer einen Bereich (33) großen Innendurchmessers und einen zum nahe gelegenen Ende der Walze (10) hin axial benachbarten Bereich (34) geringeren Innendurchmessers aufweisenden Lagerglocke (30),
wobei die Hohlwalze (2) mit einem im Außendurchmesser verringerten axialen Ansatz (20) in den Bereich (33) größeren Innendurchmessers der Lagerglocke (30) eingreift, und wobei zwischen dem Ende des Ansatzes (20) und der Lager glocke (30) eine Dichtung (25) gegen den Austritt zwischen dem Ansatz (20) und dem Querhaupt (1) befindlicher Flüssigkeit vorgesehen ist,
**dadurch gekennzeichnet,**
**dass** mindestens ein Entgasungskanal (44, 45) vorgesehen ist, durch welchen Gas von der Dichtung (25) abströmen kann.

5. Walze nach Anspruch 4, **dadurch gekennzeichnet, dass** der Entgasungskanal (44) den zwischen dem Ansatz (20) und dem Querhaupt (1) abgedichteten Raum mit einer innerhalb des Querhauptes (1) vorgesehenen Zuleitung (16) für Druck- und Wärmeträgerflüssigkeit verbindet.

6. Walze nach Anspruch 4 oder 5, **dadurch gekennzeichnet, dass** Mittel vorgesehen sind, durch die in mindestens einem der Entgasungskanäle (44, 45) ein
Druck erzeugt wird, der geringer ist als der Druck in dem zwischen dem Ansatz (20) und dem Querhaupt (1) abgedichteten Raum.

7. Walze nach Anspruch 6, **dadurch gekennzeichnet, dass** die Mittel eine Saugpumpe umfassen, die an mindestens einem der Entgasungskanal (44, 45) angeschlossen ist.

8. Walze nach Anspruch 6 oder 7, **dadurch gekennzeichnet, dass** die Mittel eine Querschnittsreduzierung in der Zuleitung (16) in dem Bereich, in dem der Entgasungskanal (44) in die Zuleitung (16) einmündet, umfassen, so dass eine erhöhte Strömungsgeschwindigkeit in der Zuleitung (16) und damit ein Saugeffekt in dem Entgasungskanal (44) bewirkt wird.

9. Walze nach Anspruch 8 **dadurch gekennzeichnet, dass** die Querschnittsreduzierung durch eine Verringerung des Durchmessers der Zuleitung bewirkt wird.

10. Walze nach Anspruch 8 **dadurch gekennzeichnet, dass** die Querschnittsreduzierung durch einen Strömungskörper (48) bewirkt wird, der in dem Bereich, in dem der Entgasungskanal (44) in die Zuleitung (16) einmündet, in der Zuleitung (16) angeordnet und derart ausgestaltet ist, dass er eine erhöhte Strömungsgeschwindigkeit in der Zuleitung (16) und damit einen Saugeffekt in dem Entgasungskanal (44) bewirkt.

11. Walze nach einem der Ansprüche 4 bis 10, **dadurch gekennzeichnet, dass** der Entgasungskanal (44, 45) Teil eines Kreislaufs (K) ist, in dem mit dem Gas abgeführte Druck - und Wärmeflüssigkeit umläuft.

12. Walze nach Anspruch 11 **dadurch gekennzeichnet, dass** in dem Kreislauf ein Ausdehnungsgefäß (AD) eingeschaltet ist.

13. Walze nach Anspruch 11 oder 12, **dadurch gekennzeichnet, dass** der Kreislauf ein Gasabführsystem umfasst.

14. Walze nach einem der Ansprüche 11 bis 13, **dadurch gekennzeichnet, dass** Mittel vorgesehen sind, mittels welchen die Verbindung zwischen dem Entgasungskanal (44, 45) und dem Kreislauf zyklisch hergestellt und unterbrochen werden kann.

15. Walze nach einem der Ansprüche 4 bis 14, **dadurch gekennzeichnet, dass** die Dichtung (25) eine Gleitringdichtung ist.

## Claims

1. Method for operating a roll (10) comprising a revolving hollow roll (2) forming the working roll circumference,
comprising a yoke (1) which reaches through the length of the latter and leaves a space all round with respect to the inner circumference of the hollow roll (2) and to which external forces can be applied at the ends projecting beyond the hollow roll (2),
comprising supporting means formed in the interspace between the hollow roll (2) and the yoke (1), via which the hollow roll (2) is supported on the yoke (1) by means of a pressurized fluid,
comprising a bearing (40) which is arranged at each end of the hollow roll (2), axially outside a transverse end seal (11), and on which the hollow roll (2) is rotatably supported with respect to the yoke (1), comprising a bearing bell (30) having a region (33) of large internal diameter and a region (34) of smaller internal diameter axially adjacent to the near end of the roll (10), the hollow roll (2) engaging in the region (33) of larger internal diameter of the bearing bell (30) with an axial extension (20) of reduced external diameter, and a seal (25) against the escape of fluid located between the extension (20) and the yoke (1) being provided between the end of the extension (20) and the bearing bell (30), **characterized in that**
the space sealed off by the seal (25) between the extension (20) and the yoke (1) is degassed.

2. Method according to Claim 1, **characterized in that** the space sealed off by the seal (25) between the extension (20) and the yoke (1) is degassed continually.

3. Method according to Claim 1, **characterized in that** the space sealed off by the seal (25) between the extension (20) and the yoke (1) is degassed cyclically.

4. Roll (10),
comprising a revolving hollow roll (2) forming the working roll circumference,
comprising a yoke (1) which reaches through the length of the latter and leaves a space all round with respect to the inner circumference of the hollow roll (2) and to which external forces can be applied at the ends projecting beyond the hollow roll (2),
comprising supporting means formed in the interspace between the hollow roll (2) and the yoke (1), via which the hollow roll (2) is supported on the yoke (1) by means of a pressurized fluid,
comprising a bearing (40) which is arranged at each end of the hollow roll (2), axially outside a transverse end seal (11), and on which the hollow roll (2) is rotatably supported with respect to the yoke (1), comprising a bearing bell (30) having a region (33) of large internal diameter and a region (34) of smaller internal diameter axially adjacent to the near end of the roll (10), the hollow roll (2) engaging in the region (33) of larger internal diameter of the bearing bell (30) with an axial extension (20) of reduced external diameter, and a seal (25) against the escape of fluid located between the extension (20) and the yoke (1) being provided between the end of the extension (20) and the bearing bell (30), **characterized in that**
at least one degassing duct (44, 45) is provided, through which gas can flow away from the seal (25).

5. Roll according to Claim 4, **characterized in that** the degassing duct (44) connects the space sealed off between the extension (20) and the yoke (1) to a feed line (16) provided within the yoke (1) for pressurized and heat-exchange fluid.

6. Roll according to Claim 4 or 5, **characterized in that** means are provided by means of which, in at least one of the degassing ducts (44, 45), a pressure is produced which is lower than the pressure in the space sealed off between the extension (20) and the yoke (1).

7. Roll according to Claim 6, **characterized in that** the means comprise a suction pump which is connected to at least one of the degassing ducts (44, 45).

8. Roll according to Claim 6 or 7, **characterized in that** the means comprise a reduction in the cross section of the feed line (16) in the region in which the degassing duct (44) opens into the feed line (16), so that an increased flow velocity in the feed line (16) and therefore a suction effect in the degassing duct (44) is effected.

9. Roll according to Claim 8, **characterized in that** the reduction in the cross section is effected by a reduction in the diameter of the feed line.

10. Roll according to Claim 8, **characterized in that** the reduction in the cross section is effected by a fluidic element (48) which is arranged in the feed line (16) in the region in which the degassing duct (44) opens into the feed line (16) and which is configured in such a way that it effects an increased flow velocity in the feed line (16) and therefore a suction effect in the degassing duct (44).

11. Roll according to one of Claims 4 to 10, **characterized in that** the degassing duct (44, 45) is part of a circuit (K) in which pressurized and heat-exchange fluid extracted with the gas circulates.

12. Roll according to Claim 11, **characterized in that** an expansion vessel (AD) is connected into the circuit.

13. Roll according to Claim 11 or 12, **characterized in that** the circuit comprises a gas extraction system.

14. Roll according to one of Claims 11 to 13, **characterized in that** means are provided by means of which the connection between the degassing duct (44, 45) and the circuit can be made and broken cyclically.

15. Roll according to one of Claims 4 to 14, **characterized in that** the seal (25) is a sliding ring seal.

## Revendications

1. Procédé pour faire fonctionner un rouleau (10) avec un rouleau creux (2) périphérique formant la périphérie de travail du rouleau,
avec une traverse (1) traversant celui-ci sur toute sa longueur, laissant tout autour une distance par rapport à la périphérie intérieure du rouleau creux (2), sur laquelle peuvent être appliquées des forces extérieures aux extrémités saillant hors du rouleau creux (2),
avec des moyens de support formés dans l'espace intermédiaire entre le rouleau creux (2) et la traverse (1), par le biais desquels le rouleau creux (2) s'appuie sur la traverse (1) au moyen d'un liquide sous pression,
avec un palier (40) disposé sur chaque extrémité du rouleau creux (2) axialement à l'extérieur d'un joint d'étanchéité transversal d'extrémité (11), sur lequel le rouleau creux (2) s'appuie de manière à pouvoir tourner par rapport à la traverse (1), avec une cloche de palier (30) présentant une région (33) de grand diamètre intérieur et une région (34) de plus petit diamètre intérieur axialement adjacente vers l'extrémité proximale du rouleau (10),
le rouleau creux (2) venant en prise avec un élément rapporté (20) axial de diamètre extérieur réduit, dans la région (33) de plus grand diamètre intérieur de la cloche de palier (30), et un joint d'étanchéité (25) étant prévu entre l'extrémité de l'élément rapporté (20) et de la cloche de palier (30), pour empêcher la sortie de liquide se trouvant entre l'élément rapporté (20) et la traverse (1),
**caractérisé en ce que**
l'espace rendu étanche par le joint d'étanchéité (25) entre l'élément rapporté (20) et la traverse (1) est purgé de gaz.

2. Procédé selon la revendication 1, **caractérisé en ce que** l'espace rendu étanche par le joint d'étanchéité (25) entre l'élément rapporté (20) et la traverse (1) est purgé de gaz de manière permanente.

3. Procédé selon la revendication 1, **caractérisé en ce que** l'espace rendu étanche par le joint d'étanchéité (25) entre l'élément rapporté (20) et la traverse (1) est purgé de gaz de manière cyclique.

4. Rouleau (10),
comprenant un rouleau creux (2) périphérique formant la périphérie de travail du rouleau,
avec une traverse (1) traversant celui-ci sur toute sa longueur, laissant tout autour une distance par rapport à la périphérie intérieure du rouleau creux (2), sur laquelle peuvent être appliquées des forces extérieures aux extrémités saillant hors du rouleau creux (2),
avec des moyens de support formés dans l'espace intermédiaire entre le rouleau creux (2) et la traverse (1), par le biais desquels le rouleau creux (2) s'appuie sur la traverse (1) au moyen d'un liquide sous pression,
avec un palier (40) disposé sur chaque extrémité du rouleau creux (2) axialement à l'extérieur d'un joint d'étanchéité transversal d'extrémité (11), sur lequel le rouleau creux (2) s'appuie de manière à pouvoir tourner par rapport à la traverse (1), avec une cloche de palier (30) présentant une région (33) de grand diamètre intérieur et une région (34) de plus petit diamètre intérieur axialement adjacente vers l'extrémité proximale du rouleau (10),
le rouleau creux (2) venant en prise avec un élément rapporté (20) axial de diamètre extérieur réduit, dans la région (33) de plus grand diamètre intérieur de la cloche de palier (30), et un joint d'étanchéité (25) étant prévu entre l'extrémité de l'élément rapporté (20) et de la cloche de palier (30), pour empêcher la sortie de liquide se trouvant entre l'élément rapporté (20) et la traverse (1),
**caractérisé en ce que**
l'on prévoit au moins un canal de purge de gaz (44, 45), à travers lequel le gaz peut être évacué hors du joint d'étanchéité (25).

5. Rouleau selon la revendication 4, **caractérisé en ce que** le canal de purge de gaz (44) relie l'espace rendu étanche entre l'élément rapporté (20) et la traverse (1) à une conduite d'amenée (16) pour le liquide sous pression et calorigène, prévue à l'intérieur de la traverse (1).

6. Rouleau selon la revendication 4 ou 5, **caractérisé en ce que** des moyens sont prévus pour produire une pression dans au moins l'un des canaux de purge de gaz (44, 45), laquelle pression est inférieure à la pression dans l'espace rendu étanche entre l'élément rapporté (20) et la traverse (1).

7. Rouleau selon la revendication 6, **caractérisé en ce que** les moyens comprennent une pompe d'aspiration qui est raccordée à au moins l'un des canaux de purge de gaz (44, 45).

8. Rouleau selon la revendication 6 ou 7, **caractérisé en ce que** les moyens comprennent une réduction de section transversale dans la conduite d'amenée (16), dans la région dans laquelle le canal de purge de gaz (44) débouche dans la conduite d'amenée (16), de sorte qu'il en résulte une vitesse d'écoulement supérieure dans la conduite d'amenée (16) et par conséquent un effet d'aspiration dans le canal de purge de gaz (44).

9. Rouleau selon la revendication 8, **caractérisé en ce que** la réduction de section transversale est réalisée par une réduction du diamètre de la conduite d'amenée.

10. Rouleau selon la revendication 8, **caractérisé en ce que** la réduction de section transversale est réalisée par un corps d'écoulement (48) qui est disposé dans la conduite d'amenée (16) dans la région dans laquelle le canal de purge de gaz (44) débouche dans la conduite d'amenée (16), et qui est configuré de telle sorte qu'il provoque une vitesse d'écoulement accrue dans la conduite d'amenée (16) et par conséquent un effet d'aspiration dans le canal de purge de gaz (44).

11. Rouleau selon l'une quelconque des revendications 4 à 10, **caractérisé en ce que** le canal de purge de gaz (44, 45) fait partie d'un circuit (K) dans lequel circule un fluide chaud sous pression évacué avec le gaz.

12. Rouleau selon la revendication 11, **caractérisé en ce qu'**un vase d'expansion (AD) est branché dans le circuit.

13. Rouleau selon la revendication 11 ou 12, **caractérisé en ce que** le circuit comprend un système d'évacuation de gaz.

14. Rouleau selon l'une quelconque des revendications 11 à 13, **caractérisé en ce que** des moyens sont prévus, à l'aide desquels la connexion entre le canal de purge de gaz (44, 45) et le circuit est cyclique et peut être interrompue.

15. Rouleau selon l'une quelconque des revendications 4 à 14, **caractérisé en ce que** le joint d'étanchéité (25) est une garniture mécanique d'étanchéité.
